Europäisches Patentamt

European Patent Office

Office européen des brevets

(11) Veröffentlichungsnummer: **0 280 961**

A1

(12) **EUROPÄISCHE PATENTANMELDUNG**

(21) Anmeldenummer: 88102314.7

(22) Anmeldetag: 18.02.88

(51) Int. Cl.⁴: **B65D 81/20** , B65D 81/24 , B32B 27/32

(30) Priorität: 01.03.87 DE 3706618

(43) Veröffentlichungstag der Anmeldung:
07.09.88 Patentblatt 88/36

(84) Benannte Vertragsstaaten:
AT BE CH DE ES FR GB GR IT LI LU NL SE

(71) Anmelder: **Wolff Walsrode Aktiengesellschaft**
**Postfach**
**D-3030 Walsrode 1(DE)**

(72) Erfinder: **Mende, Reinhold, Dr.**
**Dürerring 45**
**D-3030 Walsrode(DE)**
Erfinder: **Bochow, Richarda**
**Tietlinger Lönsweg 55**
**D-3032 Fallingbostel(DE)**

(74) Vertreter: **Zobel, Manfred, Dr. et al**
**c/o BAYER AG Konzernverwaltung RP**
**Patentabteilung Bayerwerk**
**D-5090 Leverkusen(DE)**

(54) Verfahren zur Verlängerung der Haltbarkeit von Gütern und dafür geeignete Beutel.

(57) Beutel, die im wesentlichen aus gas-und wasser-dampfdichten Kunststoffolien bestehen und ein mit geeigneten Gasen gefülltes Reservoir mit einer gas-durchlässigen Wand enthalten, sind geeignet zur Verlängerung der Haltbarkeit von verderblichen Gütern, insbesondere von Obst, Gemüse und Schnittblumen.

EP 0 280 961 A1

## Verfahren zur Verlängerung der Haltbarkeit von Gütern und dafür geeignete Beutel

Die Verpackung für bei Luft verderbliche Güter, insbesondere Obst, Gemüse und Schnittblumen, bietet im wesentlichen Griffschutz und Schutz gegen Austrocknung. Verwendet werden z.B. Verpackungen aus Polyethylenfolien niederer Dichte oder Kunststoffolien hoher Gasdurchlässigkeit. Beispielsweise werden Kopfsalat im Polyethylenbeutel und Salatgurken in schrumpffähigen Polyethylenverpackungen verpackt. Aus H. Hansen, Der Einsatz hoher $CO_2$-Konzentrationen bei Transport und Lagerung von Weichobst, Obstbau 6, (1986), 268 ist bekannt, Obst und Gemüse in mehr oder weniger gasdichten Kunststoffolienbehältnissen unter Verwendung einer künstlichen Atmosphäre aus Kohlendioxid oder einer Mischung aus Kohlendioxid, Stickstoff und Sauerstoff in unterschiedlichen Konzentrationsbereichen zu verpacken. Schließlich ist aus P. E. Brecht, Use of controlled atmospheres to retard deterioration of produce, Food technology 3, (1980), 45 bekannt, derartige Güter unter kontrollierter Atmosphäre (controlled atmosphere - CA-Lagerung) zu lagern und zu transportieren. Hier wird höhere Haltbarkeit erreicht als bei den beiden erstgenannten Verfahren. Computer steuern die Gaszusammensetzung entsprechend dem Stoffwechsel der Produkte.

Die computergesteuerte CA-Lagerung in Hallen und Transport-Containern ist nach heutigem Stand der Technik, wegen des hohen technischen Aufwandes nur für Hersteller und den Zwischenhandel (Großhändler) geeignet.

Die bekannte Verpackung in mehr oder weniger gasdichten Kunststoffolienbehältnissen unter Einsatz von Gasgemischen bestimmter Ausgangszusammensetzung hat den Nachteil, daß durch den Stoffwechsel des frischen Produktes und Diffusion durch das mehr oder weniger gasdichte Verpackungsmaterial eine unkontrollierte Veränderung der Gaszusammensetzung resultiert. Schon nach kurzer Zeit entspricht die Atmosphäre nicht mehr den Anforderungen, wodurch die Produktqualität entscheidend beeinträchtigt wird.

Somit liefert die CA-Lagerung für die Haltbarkeit von Obst, Gemüse und Schnittblumen die bisher besten Ergebnisse.

Der Erfindung liegt die Aufgabe zugrunde, ein verbessertes Verfahren zur Verlängerung der Haltbarkeit von verderblichen Gütern, insbesondere Obst, Gemüse und Schnittblumen bereitzustellen.

Gegenstand der Erfindung ist ein im wesentlichen gas-und wasserdampfdichter Beutel aus einer Kunststoffolie, geeignet für die Verlängerung der Haltbarkeit von verderblichen Gütern, dadurch gekennzeichnet, daß in dem Beutel ein Reservoir enthalten ist, welches vom Inneren des Beutels mit einer Folie getrennt ist, deren Sauerstoffdurchlässigkeit größer ist als die Sauerstoffdurchlässigkeit der Kunststoffolie des Beutels. In einer bevorzugten Ausführungsform ist die Sauerstoffdurchlässigkeit der Folie des Beutels kleiner als 100 ml $O_2$/(m² • d • bar). In einer weiteren bevorzugten Ausführungsform beträgt die Sauerstoffdurchlässigkeit der Folie des Reservoirs mindestens 10 ml $O_2$ (m² • d • bar). Das Reservoir kann im Beutel entweder lose vorhanden sein oder mit dem Beutel fest verbunden sein oder gebildet werden durch einen Zwischenraum zwischen dem mit der sauerstoffdurchlässigeren Folie umhüllten Gut, welches sich im Beutel befindet und dem restlichen Volumen des Beutels.

Gegenstand der Erfindung ist weiterhin ein Verfahren zur Verbesserung der Haltbarkeit von verderblichen Gütern, dadurch gekennzeichnet, daß die haltbar zu machenden Güter in einen erfindungsgemäßen Beutel verpackt werden und das erfindungsgemäße Reservoir vorher oder nachher mit einem die Haltbarkeit günstig beeinflussenden Gas gefüllt wird und zusammen mit den Gütern im Beutel verschlossen wird. Die Güter, deren Haltbarkeit verbessert werden soll, können im Beutel entweder innerhalb oder außerhalb des Reservoirs verpackt werden.

Gegenstand der Erfindung ist weiterhin ein erfindungsgemäßer Beutel mit einem Reservoir in welchem verderbliche Güter verpackt sind.

Im Rahmen der vorliegenden Erfindung wurde gefunden:

a) Die Güter benötigen (als wesentlichste Komponenten), um nicht zu verderben, eine bestimmte relative Luftfeuchtigkeit und eine Sauerstoff-und Kohlendioxidkonzentration, die sich in definierten Konzentrationsbereichen bewegen muß (produktspezifisch).

b) Die Güter benötigen für eine längere Haltbarkeit einen gebremsten Stoffwechsel.

c) Weitere Zusätze von gasförmigen oder festen Stoffen können für bestimmte Güter erforderlich sein, wie z.B. $N_2$ als Stützgas und Verdünnungsmittel, Ethylen als Reifegas, Kohlenmonoxid zur zusätzlichen Fäulnishemmung usw..

Erfindungsgemäß konnten diese Forderungen vorzugsweise durch folgende Vorgehensweise erzielt werden:

a) Die Güter werden in einen nahezu gas-und wasserdampfdichten Kunststoff-Verbundfolienbeutel zusammen mit einem "Gasreservoir" und einer definierten Begasung ($O_2$, $CO_2$, $N_2$ usw.) eingebracht und der Beutel durch Siegelung gasdicht verschlossen.

Das Gasreservoir besteht aus einer Kunststoff-Einzel-oder Verbundfolie mit definierter Gasdurchlässigkeit. Es hat ebenfalls die Form eines Beutels.

Die Gasfüllung besteht entweder aus einem Einzelgas oder einer Gasmichung mit definierten Parametern (Volumen, Konzentration, Druck).

b) Die Güter werden in einen Kunststoff-Einzel-oder Verbundfolienbeutel mit definierter Gasdurchlässigkeit mit definierter Begasung (siehe a) verpackt und mit einem Umbeutel aus nahezu gas-und wasserdampfdichter Kunststoffverbundfolie mit definierter Gasfüllung (siehe a) zweitverpackt.

c) Für Großgebinde (z.B Paletten) empfiehlt sich z.B. folgende Vorgehensweise: Die Palette mit den Gütern und Gasreservoir wird gemäß a) in einer nahezu gas-und wasserdampfdichten und mechanisch stark belastbaren Kunststoffverbundfolie (z.B. glitterverstärkt) begast und verpackt.

Für die serienmäßige Verpackung von Obst, Gemüse und Schnittblumen können handelsübliche Einschlagmaschinen mit Begasungsvorrichtung eingesetzt werden. Das vorgefertigte Gasreservoir wird dann jeder Packung beigelegt.

Zur Herstellung der nahezu gasdichten Umverpackung können alle bekannten thermoplastischen, filmbildenden Kunststoffe verwendet werden, die selbst mehr oder weniger gasdichte Folien liefern oder zu Verbundfolien mit einer Gassperrschicht verarbeitet werden können. Diese Folien können nicht orientiert oder mono-oder biaxial verstreckt sein. Thermoplaste mit einer ausreichenden Gasdichtigkeit sind z.B. Polyvinylidenchlorid, Polyester, über 90 Mol-% verseiftes Ethylen/Vinylacetat-Copolymer, Polyvinylalkohol, Polyamid oder Mischungen aus diesen Polymeren.

Vorzugsweise besteht die nahezu gasdichte Umverpackung aus einer Verbundfolie aus einer Polyethylenfolie, einer Gassperrschicht aus zu über 98 % verseiftem Ethylen/Vinylacetat-Copolymer und einer Siegelschicht, vorzugsweise aus Polyethylen niederer Dichte und üblichen Haftvermittlerschichten.

Die Verbundfolie wird vorzugsweise durch (Co)-extrusion hergestellt.

Die Sauerstoffdurchlässigkeit der Folie für die nahezu gasdichte Umverpackung sollte im Bereich von 0 bis 100 ml $O_2/(m^2 \bullet d \bullet bar)$ liegen, vorzugsweise kleiner 1 ml $O_2/(m^2 \bullet d \bullet bar)$ sein.

Die Folie für das Reservoir sollte eine Folie mit einer Sauerstoffdurchlässigkeit von mindestens 10 ml $O_2/(m^2 \bullet d \bullet bar)$, vorzugsweise von 100 bis 2000 ml $O_2/(m^2 \bullet d \bullet bar)$ sein in Abhängigkeit vom zu verpackenden Gut, Lagertemperatur und Gebindegröße. Hier können auch Folien zum Einsatz kommen, wie sie für die Umverpackung eingesetzt werden. Vorzugsweise werden aber Polyolefinfolien wie z.B. eine Polyethylen-, Polypropylenfolie, eine Zellglasfolie oder eine Kombination solcher bekannten Folien eingesetzt.

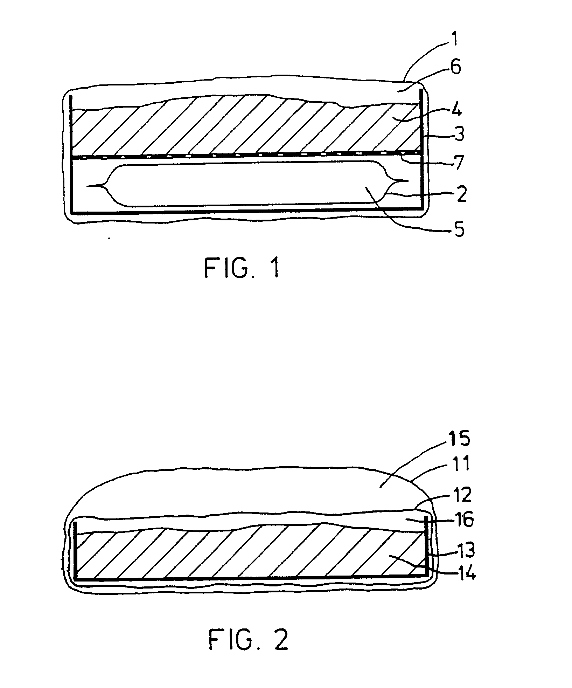

Bevorzugte Ausführungsformen sind in den Fig. 1 und 2 dargestellt. Gemäß Fig. 1 werden die Güter in einem Beutel mit losem Reservoir verpackt, gemäß Fig. 2 wird das Reservoir gebildet durch die Differenz von gesamtem Beutelvolumen und dem darin in einer sauerstoffdurchlässigeren Folie umhüllten Gut. Im einzelnen wird gemäß Fig. 1 das zu verpackende Gut (4) auf einer Steige (3) mit gasdurchlässigem Boden (7) gelagert. Unterhalb der Steige (3) ist ein Gasreservoir (2) mit gasdurchlässiger Folie angeordnet. Das ganze ist mit einer gasdichten Umverpackung (1) unter Bildung eines Beutels verpackt, wobei in den Raum (6) vorzugsweise Kohlendioxid, Stickstoff und Sauerstoff gegeben werden. Gemäß Fig. 2 ist das Gut (14) auf einer Steige (13) mit einer sauerstoffdurchlässigen Folie (12) umhüllt und durch diese gasdurchlässige Folie von dem durch die gasdichte Umverpackung (11) gebildeten Beutelinnenraum getrennt. In den Zwischenraum (16) können vorzugsweise wiederum Kohlendioxid, Stickstoff und Sauerstoff eingegeben werden. In die mit (5) und (15) angegebenen Räume wird vorzugsweise Sauerstoff gegeben.

Beispiel 1

Zur Untersuchung des günstigen Einflusses des beschriebenen Verfahrens auf die Haltbarkeit der aufgeführten Produktgruppen wurde wie folgt vorgegangen:

15 kg weißer Spargel wurden erntefrisch rasch in Eiswasser auf 1 bis 2° C abgekühlt.

Zum Vergleich wurden folgende Verpackungsalternativen herangezogen:

a) Erfindungsgemäß wurde ein Siegelrandbeutel aus Polyethylenfolie hoher Dichte (100 µm) mit einer Sauerstoffdurchlässigkeit von ca. 500 ml $O_2/(m^2 \bullet d \bullet bar)$ bei 23°C mit dem Abmessungen 300 mm x 300 mm (Länge x Breite) mit Sauerstoff aus einer Gasflasche gefüllt (ca. 5.1) und mit einem handelsüblichen Handsiegelgerät verschlossen ( = Gasreservoir). 5 kg des vorgekühlten Spargels wurden in eine hölzerne Steige mit den Abmessungen 500 mm x 300 mm x 100 mm (Länge x Breite x Höhe) eingelegt. Der Boden der Steige war aus Gründen der hinreichenden Gaszirkulation gelocht.

In eine zweite Steige gleichen Aufbaus wurde das Gasreservoir eingelegt. Die mit Spargel gefüllte Steige wurde deckungsgleich auf die zweite Steige gestellt.

Ein weiterer Siegelrandbeutel wurde aus einer Folie mit symmetrischen Aufbau (A/B/C/B/A), wobei A = Polyethylen niederer Dichte, B = Haftvermittler aus einem Polyethylen-Copolymer und C = Ethylen-Vinylalkohol-Copolymer, hergestellt. Die Foliengesamtdicke betrug 40 μm und die Sauerstoffdurchlässigkeit 1 ml $O_2$/($m^2 \bullet d \bullet bar$) bei 23°C. Die Abmessungen des Siegelrandbeutels wurden so gewählt, daß sich das Gesamtgebinde - bestehend aus den beiden Steigen - bequem darin unterbringen ließ und ein einwandfreier Verschluß dieser nahezu gasdichten Umverpackung möglich war (Länge x Breite = 800 x 700 mm).

Über jeweils einen Strömungsmesser wurden Sauerstoff, Stickstoff und Kohlendioxid einem Gasmischelement zugeführt. Die Strömungsverhältnisse wurden so eingestellt, daß sich ein Mischungsverhältnis der drei Gase wie folgt ergab: $N_2 : CO_2 : O_2$ = 90 % : 5 % : 5 %.

Über einen Gasschlauch wurde der nahezu gasdichte Siegelrandbeutel mit dieser Gasmichung gefüllt, anschließend die beiden Steigen in den Beutel eingeschoben und mit dem Verschließen der noch offenen Breitseite des Siegelrandbeutels über ein Handsiegelgerät begonnen. Während dieses Verschließvorganges blieb der Gaseinleitungsschlauch in seiner Position, um sicherzustellen, daß die Gaszusammensetzung im Inneren des Gebindes auch der gewünschten Atmosphäre entspricht. Erst zum Ende der Verschließvorganges wurde der Schlauch herausgezogen, die Naht versiegelt und damit die Gaseinleitung und Spülung mit der Gasmischung unterbrochen.

Die Lagerung dieses Gebindes erfolgte bei 1 bis 2° C.

b) Alternativ zu der unter a) beschriebenen Verpackung wurden weitere 5 kg vorgekühlter Spargel ebenso verpackt mit der Abweichung, daß das Gasreservoir fortgelassen wurde.

Die Lagerung erfolgte wie unter a) beschrieben.

c) Als dritte Variante wurden weitere 5 kg vorgekühlter Spargel wie unter a) beschrieben verpackt. Zum Unterschied zu a) wurde aber kein Gasreservoir eingelegt. Weiterhin wurde die Umverpackungsfolie vollflächig perforiert und auf das Einleiten der $N_2$/$CO_2$/$O_2$-Gasmischung verzichtet. Diese Art der Verpackung entspricht somit weitgehend der heute marktüblichen Verpackung für kleinere Gebinde.

Die Lagerung erfolgte wie unter a) beschrieben.

Die Ergebnisse der Lagertests sehen wie folgt aus:

Für die handelsübliche Lagerung in perforierten Beuteln unter Normalatmosphäre (Version c) war bereits nach einer Woche eine Farveränderung der Spargelköpfe (violett statt weiß) festzustellen. Bereits nach zehn Tagen war eine Fäulnis der Spargelköpfe und Schimmelbildung zu beobachten.

Die Alternative b) ließ den Spargel zwar noch nach 3 Wochen frisch erscheinen und eine Farbveränderung der Köpfe war nicht festzustellen.

Beim Öffnen der Packung war aber ein sehr übler Geruch bemerkbar und der Spargel ungenießbar, da offenbar eine Gärung eingesetzt hatte.

Nur bei der erfindungsgemäßen Lagerung a) war der verpackte Spargel noch nach 5 Wochen frei von Fremdgeruch oder Fremdgeschmack und war von frischem Aussehen mit nach wie vor hellen Köpfen.

## Ansprüche

1. Praktisch gas-und wasserdampfdichter Beutel aus einer Kunststoffolie, geeignet für die Verlängerung der Haltbarkeit von verderblichen Gütern, dadurch gekennzeichnet, daß in dem Beuteul ein Reservoir enthalten ist, welches vom Inneren des Beutels mit einer Folie getrennt ist, deren Sauerstoffdurchlässigkeit größer als die Sauerstoffdurchlässigkeit der Kunststoffolie des Beutels ist.

2. Beutel nach Anspruch 1, dadurch gekennzeichnet, daß die Sauerstoffdurchlässigkeit der Folie des Beutels weniger als 100 ml ($m^2 \bullet d \bullet bar$) beträgt.

3. Beutel nach wenigstens einem der vorhergehenden Ansprüche, dadurch gekennzeichnet, daß die Sauerstoffdurchlässigkeit der Folie des Reservoirs mindestens 10 ml ($m^2 \bullet d \bullet bar$) beträgt.

4. Beutel nach wenigstens einem der vorhergehenden Ansprüche, dadurch gekennzeichnet, daß die Kunststoffolie des Beutels eine Verbundfolie ist, die eine Polyethylenfolie, eine Gassperrschicht aus zu über 98 % verseiftem Ethylen/Vinylacetat-Copolymer und eine Siegelschicht enthält und daß die Folie für das Reservoir eine Polyolefinfolie oder eine Zellglasfolie ist.

FIG. 1

FIG. 2

**Europäisches Patentamt**

# EUROPÄISCHER RECHERCHENBERICHT

Nummer der Anmeldung

EP 88 10 2314

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-3 630 759 (G.G. RUMBERGER) * Spalte 1, Zeilen 60-75; Spalte 3, Zeilen 26-43; Tabelle 3; Spalte 7, Zeilen 34-42 * | 1 | B 65 D 81/20<br>B 65 D 81/24<br>B 32 B 27/32 |
| Y | --- | 2-4 | |
| Y | DE-A-2 744 713 (W.R. GRACE & CO.) * Ansprüche * --- | 2-4 | |
| A | FR-A-2 275 377 (W.R. GRACE & CO.) * Ansprüche 1-6 * --- | 4 | |
| P,A | EP-A-0 217 252 (W.R. GRACE & CO.) * Ansprüche 1,7,8 * ----- | 4 | |
| | | | **RECHERCHIERTE SACHGEBIETE (Int. Cl.4)**<br><br>B 65 D<br>B 32 B |

Der vorliegende Recherchenbericht wurde für alle Patentansprüche erstellt

| Recherchenort | Abschlußdatum der Recherche | Prüfer |
|---|---|---|
| DEN HAAG | 01-06-1988 | CLARKE A.J. |